# EUROPÄISCHE PATENTANMELDUNG

(11) **EP 1 283 127 A2**
(43) Veröffentlichungstag der Anmeldung: **12.02.2003**
(21) Anmeldenummer: 02017385.2
(22) Anmeldetag: 02.08.2002
(51) Int. Cl.: B60Q 1/08, B60Q 1/12, B60Q 1/14

(54) **Verfahren zum Ansteuern eines Scheinwerfersystems zur Erzeugung adaptiver Lichtfunktionen**

(30) Priorität: 08.08.2001 DE 10139010; 08.08.2001 DE 10139011; 08.08.2001 DE 10139012; 08.08.2001 DE 10139013
(71) Anmelder: Volkswagen Aktiengesellschaft, 38436 Wolfsburg (DE)
(72) Erfinder: Georgi, André, 08066 Zwickau (DE); Werner, Michael, 38106 Braunschweig (DE)
(74) Vertreter: Rabe, Andreas

(57) **Zusammenfassung**

Die vorliegende Erfindung betrifft ein Verfahren zum Ansteuern eines Scheinwerfersystems für Fahrzeuge zur Erzeugung eines Stadtlichts, eines Schlechtwetterlichts, eines Landstraßenlichts, eines Autobahnlichts, eines Fernlichts und/oder eines Tagfahrlichts. Das Scheinwerfersystem umfasst zwei Scheinwerfereinheiten (11, 12) mit je zumindest zwei im Querschnitt senkrecht zur Lichtabstrahlrichtung runden Lichtauskoppelelementen (1, 3) und je zumindest zwei Lichtauskoppelelementen (2, 4) mit parallelen Seitenflächen. Zum Erzeugen der Lichtfunktion werden die Lichtauskoppelelemente so angesteuert, dass Licht über zumindest zwei Lichtauskoppelelemente je Scheinwerfereinheit (11, 12) abgestrahlt wird.

## Beschreibung

Die vorliegende Erfindung betrifft ein Verfahren zum Ansteuern eines Scheinwerfersystems für Fahrzeuge zur Erzeugung eines Stadtlichts, eines Schlechtwetterlichts, eines Landstraßenlichts, eines Autobahnlichts, eines Fernlichts und/oder eines Tagfahrlichts. Das Scheinwerfersystem umfasst dabei zwei Scheinwerfereinheiten mit je zwei im Querschnitt senkrecht zur Lichtabstrahlrichtung runden Lichtauskoppelelementen und zwei Lichtauskoppelelementen mit parallelen Seitenflächen.

Bei herkömmlichen Scheinwerfersystemen kann eine begrenzte Anzahl von Lichtfunktionen von den einzelnen Lichtquellen des Scheinwerfersystems erzeugt werden. Diese Lichtfunktionen umfassen im wesentlichen ein Abblendlicht, ein Fernlicht sowie unter Umständen auch ein Nebellicht. Mit einem solchen bekannten Scheinwerfersystem läßt sich jedoch die Ausleuchtung der Umgebung nur sehr begrenzt an verschiedenartige Fahrsituationen und Wetterverhältnisse anpassen. Aufgrund der hohen Fahrzeugdichte kann das Fernlicht immer seltener benutzt werden, da durch dieses die Fahrer vorausfahrender und entgegenkommender Fahrzeuge geblendet werden. Daher wird inzwischen fast ausschließlich das Abblendlicht benutzt.

Aus diesem Grund gibt es das Bestreben, neue Scheinwerfersysteme einzuführen, mit denen Lichtfunktionen realisiert werden können, deren Lichtverteilung variabler ist und die besser den Fahr- und Umgebungsbedingungen angepaßt werden können. Solche neuen intelligenten Scheinwerfersysteme werden derzeit im Rahmen des sog. AFS-Projekts (Advanced Frontlightening System) von Fahrzeugherstellern und der Zulieferindustrie entwickelt. Die Erfindung betrifft ein Verfahren, das ein im Rahmen dieses Projekts entwickeltes Scheinwerfersystem zur Erzeugung adaptiver Lichtfunktionen ansteuert. Beispielsweise sollen ein Stadtlicht, ein Schlechtwetterlicht, ein Landstraßenlicht, ein Autobahnlicht, ein Fernlicht oder ein Tagfahrlicht realisiert werden.

Bei einem bekannten Scheinwerfersystem, mit dem verschiedene Beleuchtungsfunktionen realisiert werden können, wurde die Blende eines Scheinwerfers mit Gasentladungslampe durch eine Walze ersetzt. Der Mantel der Walze ist in Abschnitte unterteilt, die jede eine andere Form aufweisen, und so die Hell-Dunkel-Grenze variabel gestaltet. Durch Drehung der Walze und Aktivierung von Halogenlampen in Zusatzreflektoren können verschiedene Lichtfunktionen realisiert werden.

Nachteilhaft an diesem System ist das hohe Gewicht des Scheinwerfersystems, insbesondere aufgrund der Walze und der zugehörigen Motorik. Außerdem stellen die begrenzten Lebensdauern der verschiedenen verwendeten Lichtquellen und der mit dem Auswechseln dieser Lichtquellen verbundene Aufwand ein Problem dar. Ferner führt die Summe der eingesetzten Lichtquellen bei einer Beschädigung des Scheinwerfers bei einem Unfall zu sehr hohen Reparaturkosten. Außerdem ist der Energiebedarf eines solchen Scheinwerfers sehr hoch.

Ein neuerer Ansatz verschiedenartige Lichtfunktionen in einem Scheinwerfersystem zu realisieren ist der Einsatz der Lichtleittechnik. Ein solcher Einsatz wurde in einem Artikel von Karsten Eichhorn: Das Zukunfts-Potential von Scheinwerfern mit Lichtleittechnik, ATZ Automobiltechnische Zeitschrift 100 (1998) 5, vorgeschlagen. Bei einem solchen Scheinwerfersystem wird als Lichtquelle eine leistungsstarke Halogen- oder Gasentladungslampe verwendet. Über einen elliptischen Reflektor wird das von dieser Lichtquelle emittierte Licht in einen Lichtleiter eingekoppelt. Der Lichtleiter überträgt das Licht von der Ein- zur Auskoppeleinheit. Als Lichtleiter werden anorganische oder organische Gläser im Kern als Glas- oder Kunststoff-Faser verwendet. Auf der Lichtauskoppelseite des Lichtleiters befindet sich ein Lichtauskoppelelement, in welches das Licht des Lichtleiters eingekoppelt wird. Das Lichtauskoppelelement besitzt eine Optik mit abbildenden und streuenden Eigenschaften. Ein Beispiel für ein solches Lichtauskoppelelement ist in der EP 0 857 913 A2 beschrieben. Der Linsenkörper dieses Auskoppelelements besteht aus einem sog. kartesischen Oval (im folgenden auch als Kartoval bezeichnet). Bei einem Scheinwerfersystem mit Lichtleittechnik können unterschiedliche Lichtverteilungen durch das situationsbedingte Umschalten einzelner Lichtleiterarme verwirklicht werden.

Weitere Scheinwerfersysteme, die Lichtleittechnik verwenden, sind in den EP 0 562 279 B1, DE 299 090 33 U1, DE 43 41 801 A1 und der EP 0 426 337 A2 beschrieben. Ein weiteres Scheinwerfersystem, bei welchem verschiedene Lichtfunktionen ohne die Verwendung der Lichtleittechnik verwirklicht werden, ist in der DE 198 43 817 A1 beschrieben.

Es ist die Aufgabe der vorliegenden Erfindung ein Verfahren zum Ansteuern eines Scheinwerfersystems der eingangs genannten Art bereitzustellen, durch das ein Stadtlicht, ein Schlechtwetterlicht, ein Landstraßenlicht, ein Autobahnlicht, ein Fernlicht und/oder ein Tagfahrlicht erzeugt wird.

Diese Aufgabe wird erfindungsgemäß durch ein Verfahren gemäß Anspruch 1 gelöst, wobei sich vorteilhafte Ausgestaltungen aus den Unteransprüchen ergeben.

Das erfindungsgemäße Scheinwerfersystem umfasst zwei Scheinwerfereinheiten mit je zumindest zwei im Querschnitt senkrecht zur Lichtabstrahlrichtung runden Lichtauskoppelelementen und je zumindest zwei Lichtauskoppelelementen mit parallelen Seitenflächen und die Lichtauskoppelelemente werden so angesteuert, dass Licht über zumindest zwei Lichtauskoppelelemente je Scheinwerfereinheit abgestrahlt wird.

Dabei werden zum Erzeugen des Stadtlichts und/oder des Schlechtwetterlichts die Lichtauskoppelelemente so angesteuert, dass Licht nur über die zwei Lichtauskoppelelemente mit parallelen Seitenflächen abgestrahlt wird. Durch diese Ansteuerung kann eine Lichtverteilung erzielt werden, die bezüglich der Fahrtrichtung eine im wesentlichen symmetrische Verteilung sowie eine große Streubreite und Homogenität aufweist. Diese Merkmale sind für das Stadtlicht von Vorteil, da bei dieser Fahrsituation die Blendung anderer Fahrer von nicht so großer Bedeutung ist. Wichtiger ist die große Streubreite, damit Gehwege und Kreuzungen gut ausgeleuchtet werden. Dies führt zu einer Gefahrenreduzierung.

Das Licht wird vorteilhafterweise in die zwei Lichtauskoppelelemente mit parallelen Seitenflächen über Lichtleiter eingekoppelt, wobei die Auskoppelquerschnitte der Lichtleiter vorteilhafterweise von gleichseitigen bezüglich einer vertikalen Ebene symmetrischen Dreiecken gebildet werden.

Die zwei Lichtauskoppelelemente mit den parallelen Seitenflächen sind vorteilhafterweise untereinander angeordnet. Beim Erzeugen des Stadtlichts wird das untere Lichtauskoppelelement mit den parallelen Seitenflächen vorteilhafterweise bezüglich der Fahrtrichtung nach außen verschwenkt. Die Verschwenkung liegt in einem Bereich zwischen 10° und 30°, insbesondere bei 20°. Durch diese statische Ausstellung des unteren Lichtauskoppelelements wird ein noch breiterer Lichtkegel realisiert, mit dem auch Geh- und Radwege sehr gut ausgeleuchtet werden können.

Außerdem wird vorteilhafterweise das obere Lichtauskoppelelement mit parallelen Seitenflächen beim Erzeugen des Stadtlichts zum zusätzlichen Erzeugen eines Kurvenlichts verschwenkt. Dabei erfolgt die Verschwenkung in Richtung einer Änderung der Fahrtrichtung. Außerdem kann das Verschwenken auch in Abhängigkeit von der Betätigung eines Fahrtrichtungsanzeigers erfolgen. Auf diese Weise kann auch bei niedrigen Geschwindigkeiten oder im Stand ein Kurvenlicht realisiert werden.

Gemäß einer Ausgestaltung der Erfindung wird das Stadtlicht nur dann angesteuert, wenn die Geschwindigkeit unterhalb einer innerhalb eines Stadtgebietes üblichen Geschwindigkeit liegt. Beispielsweise kann die Ansteuerung nur bei Geschwindigkeiten unterhalb von 50 km/h erfolgen. Durch diese Maßnahme kann gewährleistet werden, dass das Stadtlicht nicht bei höheren Geschwindigkeiten beispielsweise auf Landstraßen oder Autobahnen verwendet wird und so zu einer bei diesen Fahrstiuationen sehr nachteilhaften Blendung des Gegenverkehrs führt.

Gemäß einer Ausgestaltung des erfindungsgemäßen Verfahrens wird zum Erzeugen des Schlechtwetterlichts die Leistung der Lichtquelle für eines der zwei Lichtauskoppelelemente mit parallelen Seitenflächen gesenkt. Außerdem kann hierbei das Licht, das mit großem Winkel nach unten in Richtung des Bereichs direkt vor dem Fahrzeug abgestrahlt wird, ausgeblendet werden. Die hierdurch erzeugte Ausleuchtung ist besonders bei widrigen Wetterverhältnissen, wie z.B. bei Nebel, Nässe oder Schneefall vorteilhaft. Bei diesen Wetterverhältnissen kann sich Wasser auf der Fahrbahnoberfläche befinden, welches das Licht, das direkt in den Bereich vor dem Fahrzeug abgestrahlt wird, reflektiert und hierdurch den Gegenverkehr blendet. Durch die Ausblendung dieser Vorfeldbeleuchtung kann die Blendung des Gegenverkehrs minimiert werden.

Das obere Lichtauskoppelelement mit parallelen Seitenflächen ist vorteilhafterweise größer als das untere Lichtauskoppelelement mit den parallelen Seitenflächen. Ferner werden die sich entsprechenden Lichtauskoppelelemente der beiden Scheinwerfereinheiten je von einer gemeinsamen Lichtquelle angesteuert.

Erfindungsgemäß werden zum Erzeugen des Autobahnlichts und/oder Fernlichts die Lichtauskoppelelemente so angesteuert, dass Licht nur über die zwei runden Lichtauskoppelelemente abgestrahlt wird. Durch diese Ansteuerung kann eine Lichtverteilung erzielt werden, die beim Befahren einer Autobahn oder bei einem Fahren ohne Gegenverkehr oder vorausfahrenden Fahrzeugen besonders vorteilhaft ist. Das abgestrahlte Licht weist dabei eine bezüglich der Fahrtrichtung im wesentlichen symmetrische Verteilung mit großer Reichweite auf. Insbesondere die durch diese Ansteuerung erzielte große Reichweite ist beim Fahren mit hoher Geschwindigkeit vorteilhaft. In diesem Fall spielt die Vorfeldausleuchtung nur eine untergeordnete Rolle.

Vorteilhafterweise sind die runden Lichtauskoppelelemente eine Fresnellinse sowie ein rotationssymmetrisches kartesisches Oval. Gemäß einer weiteren Ausgestaltung werden die runden Lichtauskoppelelemente von zwei rotationssymmetrischen kartesischen Ovalen gebildet.

Außerdem kann gemäß dem erfindungsgemäßen Verfahren zum Erzeugen des Autobahn- und/oder Fernlichts vorteilhafterweise ein Kurvenlicht erzeugt werden. Hierfür wird eines der runden Lichtauskoppelelemente in Richtung einer Änderung der Fahrtrichtung verschwenkt. Hierdurch kann der Straßenverlauf auch in Kurven sehr gut verfolgt werden. Außerdem wird bei Rechtsverkehr der Gegenverkehr in Rechtskurven, bei Linksverkehr in Linkskurven, weniger geblendet. Zur Erzeugung dieses Kurvenlichts kann insbesondere die Fresnellinse verschwenkt werden. Der Schwenkwinkel ist dabei vorteilhafterweise abhängig vom Radius der gefahrenen Kurve. Die Verschwenkung kann in einem Bereich zwischen 10° und 30° erfolgen.

Die Lichtauskoppelelemente, die beim Erzeugen des Autobahnlichts und/oder des Fernlichts angesteuert werden, sind in einer Horizontalebene angeordnet.

Erfindungsgemäß werden zum Erzeugen des Landstraßenlichts die Lichtauskoppelelemente so angesteuert, dass Licht nur über eines der zwei Lichtauskoppelelemente mit parallelen Seitenflächen und eines der zwei runden Lichtauskoppelelemente abgestrahlt wird. Durch diese Ansteuerung kann eine Lichtverteilung erzielt werden, die beim Befahren der Landstraße besonders vorteilhaft ist. Insbesondere ist der Übergang von Hell zu Dunkel sehr scharf abgegrenzt, wobei auch der Verkehrsraum neben der Straße gut ausgeleuchtet wird. Hierdurch können Objekte im Verkehrsraum, wie z.B. Fußgänger, Radfahrer oder Hindernisse, sehr gut erkannt werden.

Gemäß einer vorteilhaften Ausgestaltung der Erfindung weist das abgestrahlte Licht eine bezüglich der Fahrtrichtung asymmetrische Verteilung auf, wobei eine Ausleuchtung mit größerer Reichweite auf der vom Gegenverkehr abgewandten Seite erzeugt wird. Durch die asymmetrische Lichtverteilung werden Fahrer entgegenkommender Fahrzeuge weniger geblendet.

Das runde Lichtauskoppelelement ist vorteilhaft eine Fresnellinse, es kann aber auch ein rotationssymmetrisches kartesisches Oval sein.

Außerdem kann gemäß dem erfindungsgemäßen Verfahren zum Erzeugen des Landstraßenlichts vorteilhafterweise ein Kurvenlicht erzeugt werden. Hierfür wird das runde Lichtauskoppelelement in Richtung einer Änderung der Fahrtrichtung verschwenkt. Hierdurch kann der Straßenverlauf auch in Kurven sehr gut verfolgt werden. Außerdem wird bei Rechtsverkehr der Gegenverkehr in Rechtskurven, bei Linksverkehr in Linkskurven, weniger geblendet. Der Schwenkwinkel ist dabei vorteilhafterweise abhängig vom Radius der gefahrenen Kurve. Die Verschwenkung kann in einem Bereich zwischen 10° und 30° erfolgen.

Gemäß einer vorteilhaften erfindungsgemäßen Ausgestaltung sind die lichtabstrahlenden Lichtauskoppelelemente, die beim Erzeugen des Landstraßenlichts angesteuert werden, in einer Horizontalebene angeordnet.

Erfindungsgemäß werden zum Erzeugen des Tagfahrlichts die Lichtauskoppelelemente so angesteuert, dass Licht über alle vier Lichtauskoppelelemente abgestrahlt wird und dass die Lichtauskoppelelemente aufeinander zugeschwenkt werden, so dass die Scheinwerfereinheiten diffuses Licht abstrahlen. Durch eine solche Fokussierung der Lichtauskoppelelemente zur Mitte wird eine Lichtfunktion bereitgestellt, die weniger auf eine Ausleuchtung der Fahrbahn abzielt, als vielmehr auf die Erkennbarkeit des Fahrzeugs durch andere Verkehrsteilnehmer. Dabei ist insbesondere die Blendung anderer Verkehrsteilnehmer minimal.

Gemäß einer Ausgestaltung der Erfindung werden die runden Lichtauskoppelelemente von einer Fresnellinse und einem rotationssymmetrischen kartesischen Oval gebildet. Die runden Lichtauskoppelelemente und eines der zwei Lichtauskoppelelemente mit parallelen Seitenflächen sind in einer Horizontalebene angeordnet und das andere Lichtauskoppelelement mit parallelen Seitenflächen ist unterhalb dieser Horizontalebene angeordnet.

Das Licht wird in die Lichtauskoppelelemente vorteilhafterweise über Lichtleiter eingekoppelt. Hierdurch kann das Scheinwerfersystem sehr gut an die vorhandenen Bauraumverhältnisse des Fahrzeugs angepaßt werden. Außerdem können über die variable Einkopplung des Lichts einer Lichtquelle in verschiedene Lichtleiter mehrere Lichtfunktionen mit einer Lichtquelle realisiert werden. Vorteilhafterweise werden die sich entsprechenden Lichtauskoppelelemente der beiden Scheinwerfereinheiten, d.h. des rechten und des linken Scheinwerfers, je von einer gemeinsamen Lichtquelle angesteuert.

Gemäß einer weiteren Ausgestaltung des erfindungsgemäßen Verfahrens kann die Leuchtweite eines der lichtabstrahlenden Lichtauskoppelelemente getrennt von den anderen Lichtauskoppelelementen gesteuert werden. Dabei ist die Leuchtweite dieses Lichtauskoppelelements, insbesondere in Abhängigkeit von dem Erfassen eines vorausfahrenden Fahrzeugs, steuerbar. Außerdem kann sie in Abhängigkeit von dem Erfassen eines entgegenkommenden Fahrzeugs gesteuert werden. Durch eine solche dynamische Leuchtweitenregulierung kann eine Blendung des Gegenverkehrs bzw. des vorausfahrenden Verkehrs minimiert werden.

Das Lichtauskoppelelement, dessen Leuchtweite getrennt steuerbar ist, ist vorteilhafterweise das rotationssymmetrische kartesische Oval.

Außerdem kann in Abhängigkeit von dem Erfassen eines vorausfahrenden und/oder eines entgegenkommenden Fahrzeugs die Leistung der Lichtquelle für zumindest eines der lichtabstrahlenden Lichtauskoppelelemente gesenkt werden. Für das Erzeugen eines Fernlichts wird das Lichtauskoppelelement, dessen Leuchtweite getrennt steuerbar ist, nach oben verschwenkt. Durch diese Ansteuerung werden besonders hohe Leuchtweiten und ein Maximum an Beleuchtungsstärke im Zentralbereich erzeugt.

Die Erfindung wird nun anhand von Ausführungsbeispielen mit Bezug zu den beigefügten Zeichnungen erläutert.
Fig. 1 zeigt die Lichtauskoppelelemente bzw. die Linse, die bei dem Scheinwerfersystem verwendet wurden,
Fig. 2 zeigt schematisch den Aufbau des Scheinwerfersystems mit dem das erfindungsgemäße Verfahren durchgeführt wurde,
Fig. 3 zeigt die Lichtemission beim Erzeugen des Stadtlichts,
Fig. 4 zeigt die Lichtverteilung beim Erzeugen des Stadtlichts,
Fig. 5 zeigt die Lichtemission beim Erzeugen des Schlechtwetterlichts und
Fig. 6 zeigt die Lichtverteilung beim Erzeugen des Schlechtwetterlichts,
Fig. 7 zeigt die Lichtemission beim Erzeugen des Landstraßenlichts und
Fig. 8 zeigt die Lichtverteilung beim Erzeugen des Landstraßenlichts,
Fig. 9 zeigt die Lichtemission beim Erzeugen des Autobahnlichts,
Fig. 10 zeigt die Lichtverteilung beim Erzeugen des Autobahnlichts und
Fig. 11 zeigt die Lichtverteilung beim Erzeugen des Fernlichts.

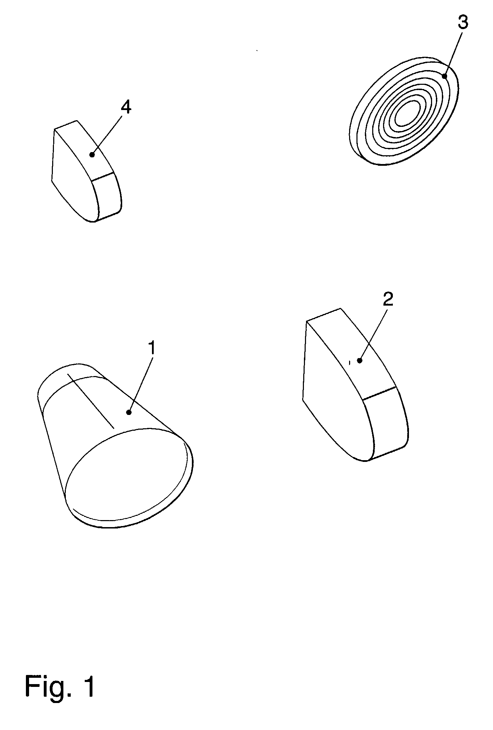

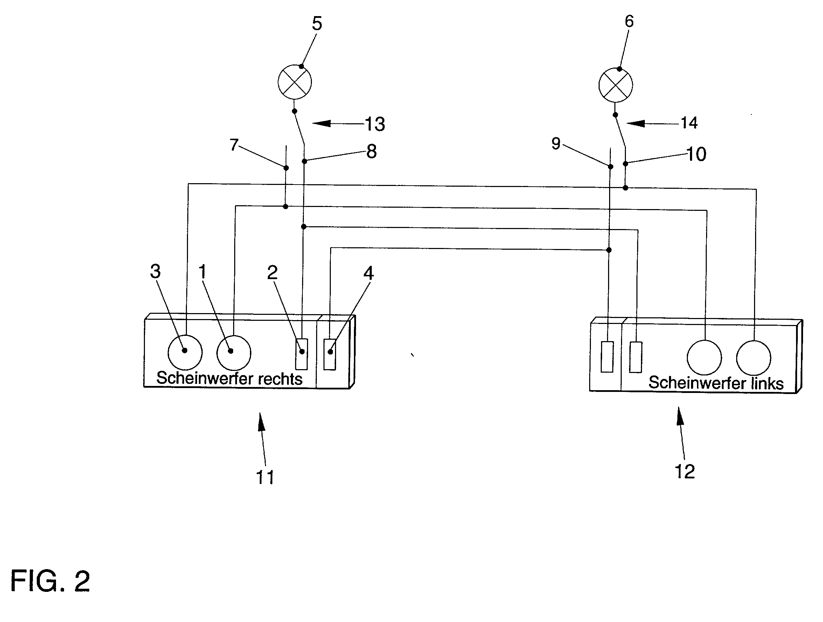

Das Scheinwerfersystem, welches über das erfindungsgemäße Verfahren angesteuert wird, ist schematisch in Fig. 2 gezeigt, die dabei verwendeten Lichtauskoppelelemente sind in Fig. 1 gezeigt. Es umfasst zwei Scheinwerfereinheiten 11 und 12, die den rechten und linken Scheinwerfer des Fahrzeugs bilden. Die Scheinwerfereinheiten 11 und 12 werden über die Lichtquellen 5 und 6 mit Licht versorgt. Als Lichtquellen werden leistungsstarke Gasentladungslampen verwendet. Außerdem ist auch der Einsatz von leistungsstarken Halogenlampen möglich.

Das von der Lichtquelle 5 emittierte Licht kann über eine Weiche 13 in den Lichtleiter 7 oder in den Lichtleiter 8 eingekoppelt werden. Außerdem kann das Licht auch in beide Lichtleiter 7 und 8 gleichzeitig eingekoppelt werden. Gleichermaßen kann das von der Lichtquelle 6 emittierte Licht über die Weiche 14 in den Lichtleiter 9 oder den Lichtleiter 10 oder in beide Lichtleiter 9 und 10 gleichzeitig eingekoppelt werden. Die Weichen 13 und 14 können beispielsweise dadurch verwirklicht werden, dass ein Motor den Reflektor der Lichtquelle 5 bzw. der Lichtquelle 6 verschwenkt und so Licht in den jeweiligen Lichtleiter eingekoppelt wird.

Die Lichtleiter 7 bis 10 bestehen aus einer großen Anzahl (bis zu 100 000) Zylindern, die sehr lang und biegsam sind. Die einzelnen Zylinder sind von einem Mantel umgeben, der das zu leitende Licht nicht austreten läßt. Als Material für die lichtleitende Faser des Lichtleiters kommt Glas oder Kunststoff, insbesondere Polymethylmethacrylat (PMMA) in Frage. Ein Zylinder hat ungefähr eine Dicke von 50 bis 70 µm. Durch Bündeln der Zylinder ergibt sich ein flexibler lichtleitender Schlauch, der zum Schutz mit einem ebenfalls flexiblen Schlauch ummantelt ist. Für die Einkopplung des Lichts von den Lichtquellen 5 und 6 wird ein kreisrunder Querschnitt auf der Einkoppelseite der Lichtleiter 7 bis 10 verwendet. Der Auskoppelquerschnitt der Lichtleiter 7 bis 10 richtet sich nach dem Licht, das über die Lichtauskoppelelemente 1 bis 4 auf die Fahrbahn projiziert werden soll. Als Querschnitte wurden dabei ein Oval, ein Dreieck und ein Zwickel verwendet.

Pro Scheinwerfereinheit 10 und 11 wurden vier Lichtauskoppelelemente 1 bis 4 verwendet. Sie sind in Figur 1 gezeigt.

Das Lichtauskoppelelement 1 ist ein rotationssymmetrisches kartesisches Oval. Es wird im folgenden als rotationssymmetrisches Kartoval 1 bezeichnet. Es weist eine senkrecht zur Lichtemissionsrichtung angeordnete Lichteinkoppelfläche auf, die mit der Auskoppelfläche des Lichtleiters 7 in Verbindung steht, wobei der Lichtleiter 7 sowohl das rotationssymmetrische Kartoval 1 der rechten Scheinwerfereinheit 11 als auch das rotationssymmetrische Kartoval der linken Scheinwerfereinheit 12 mit Licht der Lichtquelle 5 versorgt, sofern diese über die Weiche 13 angesteuert werden. Der Linsenkörper des rotationssymmetrischen Kartovals 1 ist im Querschnitt senkrecht zur Lichtabstrahlrichtung rund. Dabei ist die Lichtaustrittsfläche bezüglich einer vertikalen Ebene konvexförmig ausgebildet. Das rotationssymmetrische Kartoval 1 kann auch von einer sog. Fresnellinse ersetzt werden.

Ferner umfasst das Scheinwerfersystem zwei planparallele kartesische Ovale 2 und 4, die im folgenden als großes planparalleles Kartoval 2 und als kleines planparalleles Kartoval 4 bezeichnet werden. Die großen planparallelen Kartovale 2 der rechten und linken Scheinwerfereinheit 11, 12 werden über den Lichtleiter 8 mit Licht der Lichtquelle 5 versorgt. Hierzu besitzt es eine senkrecht zur Lichtabstrahlrichtung angeordnete Lichteinkoppelfläche. Außerdem besitzt das große planparallele Kartoval 2 voneinander beabstandete parallele Seitenflächen, die vorderseitig einen bogenförmigen Kantenverlauf aufweisen. Die Vorderkante dieses Kartovals 2 ist konvex. Über sie erfolgt die Lichtabstrahlung.

Die kleinen planparallelen Kartovale 4 der rechten und linken Scheinwerfereinheit 11, 12 werden über den Lichtleiter 9 mit Licht der Lichtquelle 6 versorgt. Der Aufbau des kleinen planparallelen Kartovals 4 entspricht dem des großen planparallelen Kartovals 2, außer dass es kleiner ist.

Außerdem weist das Scheinwerfersystem ein weiteres rundes Lichtauskoppelelement 3 auf. Dieses kann entweder von einem weiteren rotationssymmetrischen Kartoval gebildet werden oder von einer Fresnellinse. In dem in Fig. 1 gezeigten Ausführungsbeispiel wurde eine Fresnellinse 3 verwendet.

Die Lichtauskoppelelemente 1 bis 4 bestehen aus einem hochtransparenten Material, wie beispielsweise Polymethylmethacrylat (PMMA).

Die Lichtauskoppelelemente 1, 2 und 3 sind in einer horizontalen Ebene angeordnet, das Lichtauskoppelelement 4 ist unterhalb dieser Ebene angeordnet. Durch die planparallelen Kartovale 2 und 4 wird eine symmetrische Lichtverteilung erzeugt, durch das rotationssymmetrische Kartoval 1 und die Fresnellinse 3 werden hingegen asymmetrische Komponenten für eine gewünschte Lichtverteilung erzeugt.

Im folgenden wird die erfindungsgemäße Ansteuerung der vier Lichtauskoppelelemente 1 bis 4 zur Erzeugung eines Stadtlichts und eines Schlechtwetterlichts erläutert:

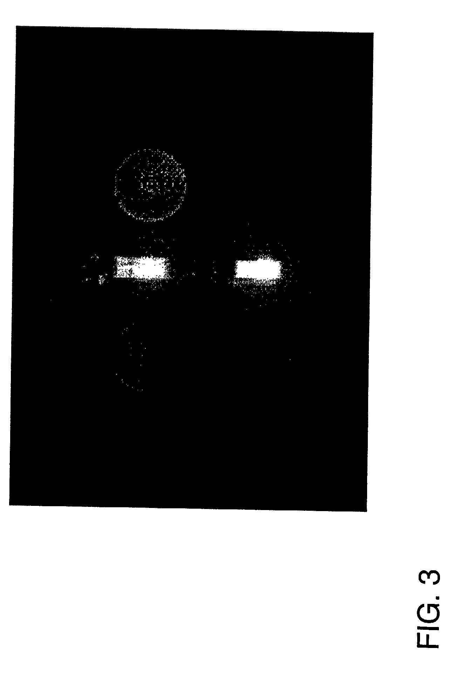

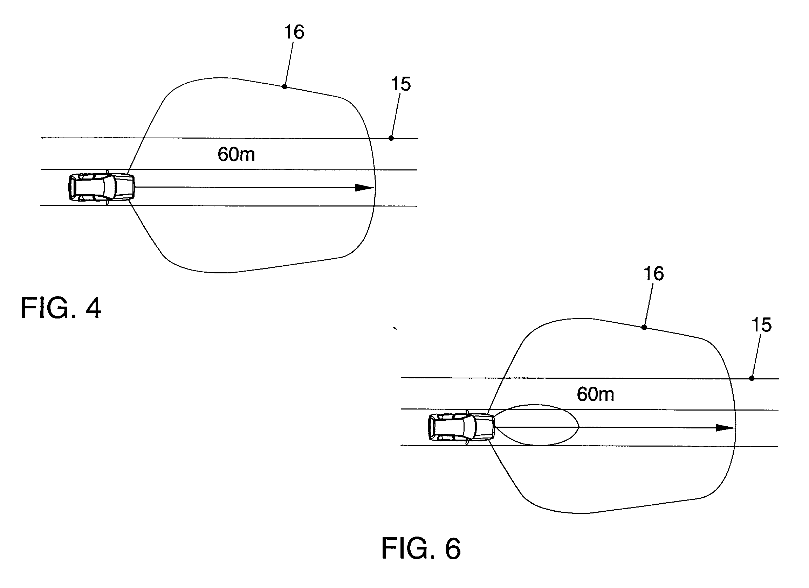

Die Weiche 13 wird so geschaltet, dass das Licht der Lichtquelle 5 in den Lichtleiter 8 eingespeist wird, so dass das Licht der Lichtquelle 5 über das große planparallele Kartoval 3 abgestrahlt wird. Die Weiche 14 wird so geschaltet, dass das Licht der Lichtquelle 6 in den Lichtleiter 9 eingekoppelt wird, so dass das Licht dieser Lichtquelle über das kleine planparallele Kartoval 4 abgestrahlt wird. In Fig. 3 ist das Nachtdesign gezeigt, das durch diese Ansteuerung erzielt wird. In Fig. 4 ist die Lichtverteilung gezeigt, die in Bezug auf die Straße 15 erzeugt wird. Dabei ist die Hell-Dunkel-Grenze mit 16 bezeichnet. Man erkennt, dass die beiden in einer senkrechten Ebene angeordneten planparallelen Kartovale 2 und 4 leuchten.

Wie aus Fig. 4 ersichtlich, ist die Lichtverteilung des erzeugten Stadtlichts symmetrisch bezüglich der Abstrahlrichtung. Insbesondere weist sie eine große Streubreite auf, damit Gehwege und Kreuzungen gut ausgeleuchtet werden. Die Ausleuchtentfernung liegt unter 60 m.

Die symmetrische Lichtverteilung wird einerseits durch die Verwendung der planparallelen Kartovale 2 und 4 als Auskoppelelemente verwirklicht als auch durch einen dreieckigen Auskoppelquerschnitt bei den Lichtleitern 8 und 9. Ferner wird das untere kleine Kartoval 4 statisch um 20° nach außen ausgestellt, wodurch ein noch breiterer Lichtkegel realisiert werden kann.

Außerdem kann das Scheinwerfersystem so angesteuert werden, dass bei der Stadtlichtfunktion ein dynamisches Kurvenlicht erzeugt wird. Hierfür wird das obere große planparallele Kartoval um eine vertikale Achse in Richtung der Änderung der Fahrtrichtung verschwenkt. Die Richtung des über das große planparallele Kartoval 2 abgestrahlten Lichts weicht somit um einen bestimmten Winkel von der Fahrtrichtung ab, so dass die befahrene Kurve ausgeleuchtet wird. Der Schwenkwinkel liegt dabei in einem Bereich zwischen 10° und 30°, insbesondere bei 20° in kurveninnere Richtung. Vorteilhafterweise erfolgt die Ansteuerung so, dass der Schwenkwinkel vom Lenkradwinkel abhängig ist. Außerdem kann das große planparallele Kartoval 2 um einen Winkel von 20° um eine vertikale Achse verschwenkt werden, wenn der Fahrtrichtungsanzeiger betätigt wird. Das untere kleine planparallele Kartoval 4 wird dabei vorteilhafterweise nicht verschwenkt, damit weiterhin mögliche Gefahren auf der anderen Fahrbahnseite erkannt werden können.

Die Ansteuerung des Stadtlichts ist mit einem Geschwindigkeitsmesser so gekoppelt, dass das Stadtlicht nur dann angesteuert werden kann, wenn die Geschwindigkeit unterhalb einer innerhalb eines Stadtgebiets üblichen Geschwindigkeit liegt. Diese übliche Geschwindigkeit kann beispielsweise bei 30 km/h oder 50 km/h liegen.

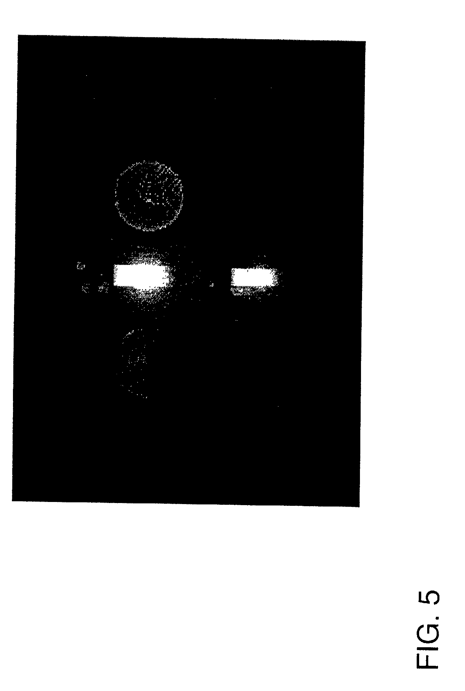

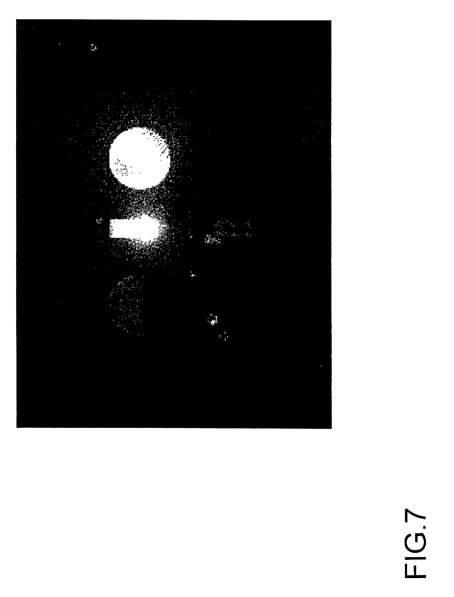

Gemäß einer weiteren Ausgestaltung des vorstehend erläuterten Ausführungsbeispiels wird zusätzlich eine Schlechtwetterlichtfunktion realisiert. Das Schlechtwetterlicht kann in Abhängigkeit von den Wetterverhältnissen, insbesondere bei Niederschlägen, zugeschaltet werden. In Fig. 5 ist das Nachtdesign des Schlechtwetterlichts gezeigt, in Fig. 6 die dazugehörige Lichtverteilung.

Bei dem Schlechtwetterlicht soll direkt vor dem Fahrzeug Beleuchtungsstärke herausgenommen werden. Das Hauptgewicht liegt bei dieser Lichtsituation auf der Seitenausleuchtung. Das Schlechtwetterlicht wird dadurch realisiert, dass die Leistung der Lichtquelle 5 gesenkt wird. Hierdurch wird die Lichtabstrahlung über das große planparallele Kartoval gedimmt, wodurch im Vorfeld in einem Bereich bis ungefähr 20 m Beleuchtungsstärke herausgenommen wird. Gemäß einem anderen Ausführungsbeispiel wird das Schlechtwetterlicht dadurch realisiert, dass eine Blende teilweise vor das obere große planparallele Kartoval 2 geschoben wird und hierdurch die Vorfeldausleuchtung verringert wird.

Im folgenden wird die erfindungsgemäße Ansteuerung der vier Lichtauskoppelelemente 1 bis 4 zur Erzeugung eines Landstraßenlichts erläutert:

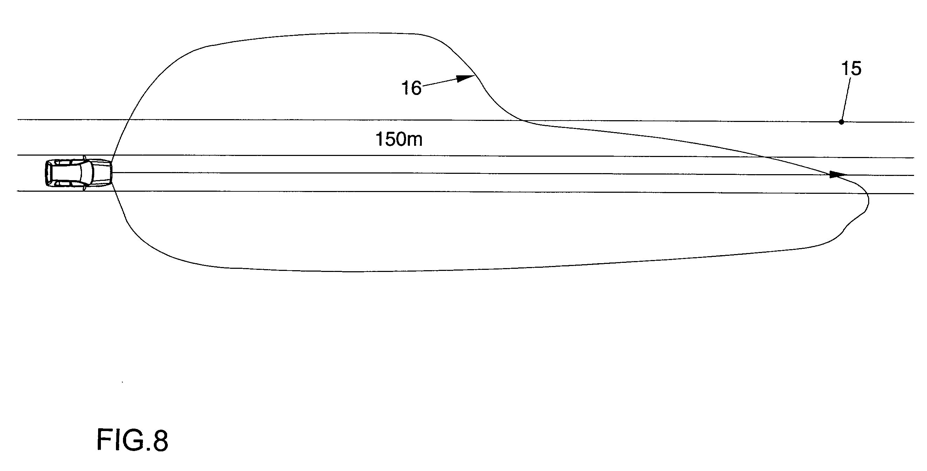

Die Weiche 13 wird so geschaltet, dass das Licht der Lichtquelle 5 in den Lichtleiter 8 eingespeist wird, so dass das Licht der Lichtquelle 5 über das große planparallele Kartoval 3 abgestrahlt wird. Die Weiche 14 wird so geschaltet, dass das Licht der Lichtquelle 6 in den Lichtleiter 10 eingekoppelt wird, so dass das Licht dieser Lichtquelle über die Fresnellinse 3 abgestrahlt wird. In Fig. 7 ist das Nachtdesign gezeigt, das durch diese Ansteuerung erzielt wird. In Fig. 8 ist die Lichtverteilung gezeigt, die in Bezug auf die Straße 15 erzeugt wird. Dabei ist die Hell-Dunkel-Grenze mit 16 bezeichnet. Man erkennt, dass die außenliegenden Fresnellinsen 3 sowie das in der gleichen Horizontalebene liegende große planparallele Kartoval 2 leuchten.

Die in Fig. 8 gezeigte Lichtverteilung weist dabei folgende Merkmale auf: Der Straßenverlauf sowie im Verkehrsraum befindliche Verkehrszeichen und andere Objekte, wie z.B. Fußgänger, Radfahrer oder Hindernisse, sind gut erkennbar. Dabei ist die Blendung anderer Verkehrsteilnehmer gering. Die Lichtverteilung ist asymmetrisch und weist auf der Beifahrerseite eine Reichweite von ca. 150 m auf.

Außerdem wird bei einer Kurvenfahrt ein dynamisches Kurvenlicht realisiert. Hierfür wird die Halterung der Fresnellinse 3 so angesteuert, dass sie um eine vertikale Achse in Richtung der Änderung der Fahrtrichtung verschwenkt wird. Die Richtung des über die Fresnellinse 3 abgestrahlten Lichts weicht somit um einen bestimmten Winkel von der Fahrtrichtung ab, so dass die befahrene Kurve ausgeleuchtet wird. Der Schwenkwinkel liegt dabei in einem Bereich zwischen 10° und 30°, insbesondere bei 20° in kurveninnere Richtung. Vorteilhafterweise erfolgt die Ansteuerung so, dass der Schwenkwinkel vom Lenkradwinkel abhängig ist. Das große planparallele Kartoval 2 kann dabei entweder unbeeinflußt bleiben oder über eine mechanische Kopplung an die Fresnellinse 3 zusammen mit dieser verschwenkt werden.

Im folgenden wird die erfindungsgemäße Ansteuerung der vier Lichtauskoppelelemente 1 bis 4 zur Erzeugung eines Autobahnlichts und eines Fernlicht erläutert:

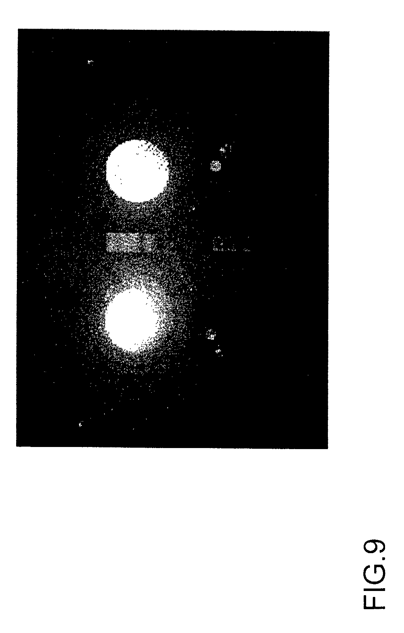

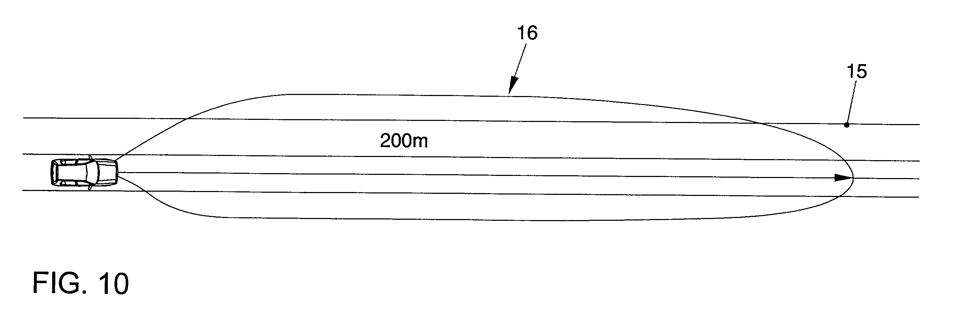

Die Weiche 13 wird so geschaltet, dass das Licht der Lichtquelle 5 in den Lichtleiter 7 eingespeist wird, so dass das Licht der Lichtquelle 5 über das rotationssymmetrische Kartoval 1 abgestrahlt wird. Die Weiche 14 wird so geschaltet, dass das Licht der Lichtquelle 6 in den Lichtleiter 10 eingekoppelt wird, so dass das Licht dieser Lichtquelle über die Fresnellinse 3 abgestrahlt wird. In Fig. 9 ist das Nachtdesign gezeigt, das durch diese Ansteuerung erzielt wird. Fig. 10 zeigt die Lichtverteilung, die in Bezug auf die Straße 15 erzeugt wird. Dabei ist die Hell-Dunkel-Grenze mit 16 bezeichnet. Man erkennt, dass die außenliegende Fresnellinse 3 sowie das in der gleichen Horizontalebene liegende rotationssymmetrische Kartoval 1 leuchten. Die in Fig. 10 gezeigte Lichtverteilung zeichnet sich durch eine symmetrische Lichtverteilung und große Sehweiten aus. Diese wird durch eine flache Vorneigung (unterhalb 1 %) erreicht. Die Vorfeldausleuchtung wird vernachlässigt, da sie bei den auf Autobahnen gefahrenen Geschwindigkeiten eine untergeordnete Rolle spielt. Der Schwerpunkt der Fahrbahnausleuchtung liegt zwischen 80 bis 120 m. Insgesamt wird eine Sehweite von ungefähr 200 m erzielt.

Außerdem wird bei einer Kurvenfahrt ein dynamisches Kurvenlicht realisiert. Hierfür wird die Halterung der Fresnellinse 3 so angesteuert, dass sie um eine vertikale Achse in Richtung der Änderung der Fahrtrichtung verschwenkt wird. Die Richtung des über die Fresnellinse 3 abgestrahlten Lichts weicht somit um einen bestimmten Winkel von der Fahrtrichtung ab, so dass die befahrene Kurve ausgeleuchtet wird. Der Schwenkwinkel liegt dabei in einem Bereich zwischen 10° und 30°, insbesondere bei 20° in kurveninnere Richtung. Vorteilhafterweise erfolgt die Ansteuerung so, dass der Schwenkwinkel vom Lenkradwinkel abhängig ist. Das rotationssymmetrische Kartoval 2 kann dabei entweder unbeeinflußt bleiben oder über eine mechanische Kopplung an die Fresnellinse 3 zusammen mit dieser verschwenkt werden.

Gemäß einer weiteren Ausgestaltung des vorstehend erläuterten Ausführungsbeispiels ist eine separate zweite Leuchtweitenregulierung für das rotationssymmetrische Kartoval 1 vorgesehen. Hierdurch kann die Weite der Fahrbahnausleuchtung gesteuert bzw. geregelt werden. Beispielsweise kann die Leuchtweitenregulierung in Abhängigkeit von dem Erfassen vorausfahrender oder entgegenkommender Fahrzeuge erfolgen. Diese Regelung kann außerdem in Verbindung mit einer Abstandserfassung erfolgen. In Sekundenbruchteilen kann so auf vorausfahrende oder entgegenkommende Fahrzeuge reagiert werden und eine Blendung dieses Verkehrs minimiert werden. Diese erhöhte Variabilität kann ferner durch die gleichzeitige Dimmung des Steuergeräts für die Gasentladungslampe einer der Lichtquellen 5, 6 oder beider Lichtquellen 5, 6 verstärkt werden.

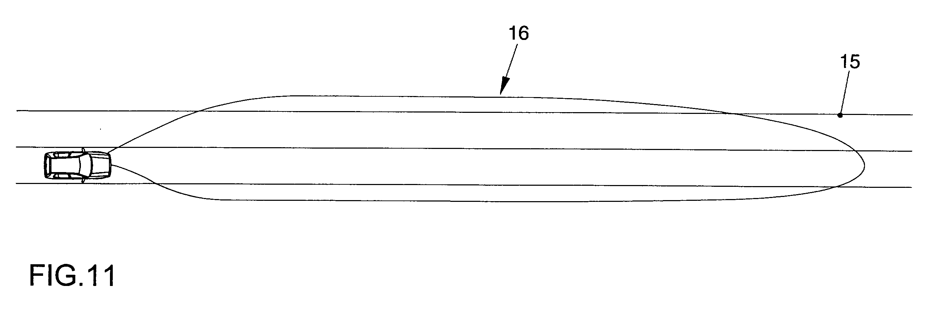

Zum Erzeugen des Fernlichts wird über die Leuchtweitenregulierung des rotationssymmetrischen Kartovals 2 dieses hochgefahren. Hierdurch kann eine noch weitere Ausleuchtung erzielt werden, wie sie in Fig. 11 gezeigt ist.

Sowohl beim Erzeugen des Fernlichts als auch beim Erzeugen des Autobahnlichts wird die Leistung der Gasentladungslampe der Lichtquelle 5 über ein dimmbares Steuergerät auf 120 % bezogen auf die herkömmlich eingesetzte Leistung angehoben. Die Leistung der Gasentladungslampe wird hierdurch auf bis zu 50 Watt angehoben.

Im folgenden wird die erfindungsgemäße Ansteuerung der vier Lichtauskoppelelemente 1 bis 4 zur Erzeugung eines Tagfahrlichts erläutert:

Die Weichen 13 und 14 werden so angesteuert, dass das Licht der Lichtquellen 5 und 6 in alle vier Lichtleiter 7 bis 10 eingespeist wird. Hierfür können die Weichen 13, 14 bevorzugt Lichtteiler aufweisen, durch die das Licht der Lichtquelle 5 bzw. der Lichtquelle 6 zu gleichen Teilen in die Lichtleiter 7, 8 bzw. 9, 10 eingestrahlt wird. Hierdurch wird Licht über alle vier Lichtauskoppelelemente 1 bis 4 abgestrahlt. Gleichzeitig werden alle vier Lichtauskoppelelemente 1 bis 4 z.B. durch ein Verschwenken der jeweiligen Halterungen zur Mitte hin fokussiert. Der Fokus kann dabei in geringem Abstand vor den Lichtauskoppelelementen liegen. In vertikaler Richtung kann er zwischen der Horizontalebene, die von den Auskoppelelementen 1 bis 3 gebildet wird, und der Höhe des Lichtauskoppelelements 4 liegen. In seitlicher Richtung liegt der Fokus zwischen den beiden äußeren Lichtauskoppelelementen 3 und 2. Hierdurch wird ein diffuses Licht erzeugt, welches das Fahrzeug für andere Verkehrsteilnehmer besonders gut sichtbar macht.

## Patentansprüche

1. Verfahren zum Ansteuern eines Scheinwerfersystems für Fahrzeuge zur Erzeugung eines Stadtlichts, eines Schlechtwetterlichts, eines Landstraßenlichts, eines Autobahnlichts, eines Fernlichts und/oder eines Tagfahrlichts,
**dadurch gekennzeichnet,**
**dass** das Scheinwerfersystem zwei Scheinwerfereinheiten (11, 12) umfasst mit je zumindest zwei im Querschnitt senkrecht zur Lichtabstrahlrichtung runden Lichtauskoppelelementen (1, 3) und je zumindest zwei Lichtauskoppelelementen (2, 4) mit parallelen Seitenflächen und dass die Lichtauskoppelelemente so angesteuert werden, dass Licht über zumindest zwei Lichtauskoppelelemente je Scheinwerfereinheit (11, 12) abgestrahlt wird.

2. Verfahren gemäß Anspruch 1,
**dadurch gekennzeichnet,**
**dass** zum Erzeugen des Stadtlichts und/oder des Schlechtwetterlichts die Lichtauskoppelelemente so angesteuert werden, dass Licht nur über die zwei Lichtauskoppelelemente (2, 4) mit parallelen Seitenflächen abgestrahlt wird.

3. Verfahren gemäß einem der Anspruch 2,
**dadurch gekennzeichnet,**
**dass** das über die zwei Lichtauskoppelelemente (2, 4) mit parallelen Seitenflächen abgestrahlte Licht eine bezüglich der Fahrtrichtung im wesentlichen symmetrische Verteilung und/oder eine große Streubreite aufweist.

4. Verfahren gemäß Ansprüche 2 oder 3,
**dadurch gekennzeichnet,**
**dass** die zwei Lichtauskoppelelemente (2, 4) mit parallelen Seitenflächen untereinander angeordnet sind.

5. Verfahren gemäß Anspruch 4,
**dadurch gekennzeichnet,**
**dass** das untere Lichtauskoppelelement (4) mit parallelen Seitenflächen beim Erzeugen des Stadtlichts bezüglich der Fahrtrichtung nach außen verschwenkt wird.

6. Verfahren gemäß Anspruch 5,
**dadurch gekennzeichnet,**
**dass** die Verschwenkung in einem Bereich zwischen 10° und 30° liegt.

7. Verfahren gemäß einem der vorstehenden Ansprüche,
**dadurch gekennzeichnet,**
**dass** das Stadtlicht nur dann angesteuert werden kann, wenn die Geschwindigkeit unterhalb einer innerhalb eines Stadtgebiets üblichen Geschwindigkeit liegt.

8. Verfahren gemäß einem der vorstehenden Ansprüche,
**dadurch gekennzeichnet,**
**dass** zum Erzeugen des Schlechtwetterlichts die Leistung der Lichtquelle (5) für eines der zwei Lichtauskoppelelemente (2, 4) mit parallelen Seitenflächen gesenkt wird.

9. Verfahren gemäß einem der vorstehenden Ansprüche,
**dadurch gekennzeichnet,**
**dass** zum Erzeugen des Schlechtwetterlichts Licht, das mit großem Winkel nach unten in Richtung des Bereichs direkt vor dem Fahrzeug abgestrahlt wird, ausgeblendet wird.

10. Verfahren gemäß einem der Ansprüche 4 bis 9,
**dadurch gekennzeichnet,**
**dass** das obere Lichtauskoppelelement (2) mit parallelen Seitenflächen größer als das untere Lichtauskoppelelement (4) mit parallelen Seitenflächen ist.

11. Verfahren gemäß Anspruch 1,
**dadurch gekennzeichnet,**
**dass** zum Erzeugen des Autobahnlichts und/oder des Fernlichts die Lichtauskoppelelemente so angesteuert werden, dass Licht nur über die zwei runden Lichtauskoppelelemente (1, 3) abgestrahlt wird.

12. Verfahren gemäß Anspruch 11,
**dadurch gekennzeichnet,**
**dass** das abgestrahlte Licht eine bezüglich der Fahrtrichtung im wesentlichen symmetrische Verteilung mit großer Reichweite aufweist.

13. Verfahren gemäß Anspruch 1
**dadurch gekennzeichnet,**
**dass** zum Erzeugen des Landstraßenlichts die Lichtauskoppelelemente so angesteuert werden, dass Licht nur über eines (2) der zwei Lichtauskoppelelemente mit parallelen Seitenflächen und eines (3) der zwei runden Lichtauskoppelelemente abgestrahlt wird.

14. Verfahren gemäß Anspruch 13,
**dadurch gekennzeichnet,**
**dass** das abgestrahlte Licht eine bezüglich der Fahrtrichtung asymmetrische Verteilung (16) aufweist, wobei eine Ausleuchtung mit größerer Reichweite auf der vom Gegenverkehr abgewandten Seite erzeugt wird.

15. Verfahren gemäß Anspruch 13 oder 14,
**dadurch gekennzeichnet,**
**dass** das runde lichtabstrahlende Lichtauskoppelelement zum Erzeugen des Landstraßenlichts eine Fresnellinse (3) ist.

16. Verfahren gemäß Anspruch 1,
**dadurch gekennzeichnet,**
**dass** zum Erzeugen des Tagfahrlichts die Lichtauskoppelelemente so angesteuert werden, dass Licht über alle vier Lichtauskoppelelemente (1 bis 4) abgestrahlt wird und dass die Lichtauskoppelelemente aufeinander zugeschwenkt werden, so dass die Scheinwerfereinheiten (11, 12) diffuses Licht abstrahlen.

17. Verfahren gemäß einem der vorstehenden Ansprüche,
**dadurch gekennzeichnet,**
**dass** die runden Lichtauskoppelelemente (1, 3) von einer Fresnellinse (3) und einem runden kartesischen Oval (1) gebildet werden.

18. Verfahren gemäß einem der vorstehenden Ansprüche,
**dadurch gekennzeichnet,**
**dass** die runden Lichtauskoppelelemente (1, 3) und eines (2) der zwei Lichtauskoppelelemente mit parallelen Seitenflächen in einer Horizontalebene angeordnet sind und das andere Lichtauskoppelelement (4) mit parallelen Seitenflächen unterhalb dieser Horizontalebene angeordnet ist.

19. Verfahren gemäß einem der Ansprüche 4 bis 10 oder 18,
**dadurch gekennzeichnet,**
**dass** das obere Lichtauskoppelelement (2) mit parallelen Seitenflächen zum zusätzlichen Erzeugen eines Kurvenlichts verschwenkt wird.

20. Verfahren gemäß Anspruch 19,
**dadurch gekennzeichnet,**
**dass** das Verschwenken des oberen Lichtauskoppelelements (2) mit parallelen Seitenflächen in Abhängigkeit von der Betätigung eines Fahrtrichtungsanzeigers erfolgt.

21. Verfahren gemäß einem der vorstehenden Ansprüche,
**dadurch gekennzeichnet,**
**dass** eines (3) der runden Lichtauskoppelelemente (1, 3) beim Erzeugen des Autobahnlichts, des Fernlichts oder des Landstraßenlichts zum zusätzlichen Erzeugen eines Kurvenlichts in Richtung einer Änderung der Fahrtrichtung verschwenkt wird.

22. Verfahren gemäß Anspruch 21,
**dadurch gekennzeichnet,**
**dass** die Fresnellinse (3) zum Erzeugen des Kurvenlichts verschwenkt wird.

23. Verfahren gemäß einem der Ansprüche 19 bis 22,
**dadurch gekennzeichnet,**
**dass** der Schwenkwinkel vom Radius der gefahrenen Kurve abhängig ist.

24. Verfahren gemäß einem der Ansprüche 19 bis 22,
**dadurch gekennzeichnet,**
**dass** die Verschwenkung in einem Bereich zwischen 10° und 30° erfolgt.

25. Verfahren gemäß einem der vorstehenden Ansprüche,
**dadurch gekennzeichnet,**
**dass** die Leuchtweite eines (1) der lichtabstrahlenden Lichtauskoppelelemente (1, 3) getrennt von den anderen Lichtauskoppelelementen (1 bis 4) gesteuert wird.

26. Verfahren gemäß Anspruch 25,
**dadurch gekennzeichnet,**
**dass** die Leuchtweite für das Lichtauskoppelelement (1), dessen Leuchtweite getrennt steuerbar ist, in Abhängigkeit von dem Erfassen eines vorausfahrenden Fahrzeugs gesteuert wird.

27. Verfahren gemäß Anspruch 25 oder 27,
**dadurch gekennzeichnet,**
**dass** die Leuchtweite für das Lichtauskoppelelement (1), dessen Leuchtweite getrennt steuerbar ist, in Abhängigkeit von dem Erfassen eines entgegenkommenden Fahrzeugs gesteuert wird.

28. Verfahren gemäß einem der Ansprüche 25 bis 27,
**dadurch gekennzeichnet,**
**dass** die Leuchtweite des rotationssymmetrischen kartesischen Ovals (1) getrennt steuerbar ist.

29. Verfahren gemäß einem der vorstehenden Ansprüche,
**dadurch gekennzeichnet,**
**dass** in Abhängigkeit von dem Erfassen eines vorausfahrenden und/oder eines entgegenkommenden Fahrzeugs die Leistung einer Lichtquelle für zumindest eines der lichtabstrahlenden Lichtauskoppelelemente (1, 3) gesenkt wird.

30. Verfahren gemäß einem der Ansprüche 25 bis 29,
**dadurch gekennzeichnet,**
**dass** das Lichtauskoppelelement (1), dessen Leuchtweite getrennt steuerbar ist, zum Erzeugen des Fernlichts nach oben verschwenkt wird.

31. Verfahren gemäß einem der vorstehenden Ansprüche,
**dadurch gekennzeichnet,**
**dass** das Licht in die Lichtauskoppelelemente (1 bis 4) über Lichtleiter (7 bis 10) eingekoppelt wird.

32. Verfahren gemäß einem der vorstehenden Ansprüche,
**dadurch gekennzeichnet,**
**dass** die sich entsprechenden Lichtauskoppelelemente der beiden Scheinwerfereinheiten (11, 12) je von einer gemeinsamen Lichtquelle (5, 6) angesteuert werden.

33. Verfahren gemäß Anspruch 31,
**dadurch gekennzeichnet,**
**dass** die Auskoppelquerschnitte der Lichtleiter (7 bis 10) von gleichseitigen, bezüglich einer vertikalen Ebene symmetrischen Dreiecken gebildet werden.
